(19) Europäisches Patentamt
European Patent Office
Office européen des brevets

(11) **EP 3 939 926 B1**

(12) **EUROPEAN PATENT SPECIFICATION**

(45) Date of publication and mention of the grant of the patent:
**19.04.2023 Bulletin 2023/16**

(21) Application number: **21382609.2**

(22) Date of filing: **06.07.2021**

(51) International Patent Classification (IPC):
**F16C 29/00** *(2006.01)*   **B66B 7/04** *(2006.01)*
**B66B 7/02** *(2006.01)*   **F16C 29/02** *(2006.01)*

(52) Cooperative Patent Classification (CPC):
**B66B 7/02; B66B 7/04; F16C 29/005; F16C 29/02;**
F16C 2240/44; F16C 2350/00

(54) **GUIDE FOR ELEVATORS AND ELEVATOR INCLUDING A CAR AND SAID GUIDE**

FÜHRUNG FÜR AUFZÜGE UND AUFZUG MIT EINER KABINE UND DIESER FÜHRUNG

GUIDE POUR ASCENSEURS ET ASCENSEUR COMPRENANT UNE CABINE ET LEDIT GUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2020 ES 202030722**

(43) Date of publication of application:
**19.01.2022 Bulletin 2022/03**

(73) Proprietor: **ORONA S. COOP.**
**20120 Hernani (Guipúzcoa) (ES)**

(72) Inventors:
• **BADIOLA PRIETO, Asier**
**20120 HERNANI (Guipúzcoa) (ES)**

• **RODRIGUEZ VIDAL, Eva**
**20600 Eibar (Guipúzcoa) (ES)**
• **ZABALA EGUREN, Alaitz**
**20500 ARRASATE-MONDRAGÓN (Guipúzcoa) (ES)**
• **AGINAGALDE LOPEZ, Andrea**
**20500 ARRASATE-MONDRAGÓN (Guipúzcoa) (ES)**

(74) Representative: **Herrero & Asociados, S.L.**
**Cedaceros, 1**
**28014 Madrid (ES)**

(56) References cited:
WO-A1-2013/055339   CN-A- 102 628 544
CN-U- 209 177 798   ES-T3- 2 227 984
JP-A- 2011 021 597   US-A1- 2013 301 963

EP 3 939 926 B1

## Description

### FIELD OF THE ART

The present invention belongs to the technical field of elevators and their car guide mechanisms. In particular, the invention relates to improvements in the features of the rails or guides with which slide systems cooperate.

### BACKGROUND OF THE INVENTION

Car guiding elements and their counterweights can be divided into sliding systems and rolling systems. While the latter use rollers that cooperate with the guides, the sliding systems use slides associated with the cars and counterweights. The movement of the slides on the guides generates friction, so it is necessary to provide lubricant to the assembly.

The patent application CN209177798 U relates to a guide shoe for elevators comprising faces adapted to cooperate with the guide of an elevator car and wherein cavities are arranged along the surface of a guide shoe to reduce friction. Also patent application CN101628678 relates to a slide for elevators in which cubeshaped grooves distributed over its surface have been made and which are intended to function as a reservoir for the lubricant. However, these slides are not sufficient to adequately reduce the coefficient of friction, nor do they reduce friction noise or environmental footprint associated with high lubricant consumption in the slide-guide assembly. Therefore, other solutions are necessary to improve the sliding on the guides.

### SUMMARY OF THE INVENTION

The object of the present invention is to improve the environmental footprint and energy efficiency and to reduce the noise produced by the sliding of the slides on a guide for elevators.

For this, the present invention proposes a guide for elevators provided with cavities distributed homogeneously over at least one surface of the guide in contact with the slide and that function as reservoirs of the lubricant and that reduce the coefficient of friction between the slide and the guide itself. The cavities made on the face of the guide in contact with the slides can have different shapes (both their perimeter and their plan projection can be circular or polygonal), although their dimensions are well defined. In particular, the cavities have a maximum width "d" between 50 $\mu$m and 200 $\mu$m, a depth "h" between 6 $\mu$m and 18 $\mu$m and a distance between centers between 150 $\mu$m and 1400 $\mu$m. The face of the guide must be provided with cavities in a width "f" between 5 and 40mm, taking into account the normal dimensions of said guides and their slides. With these parameters, the operation of the guide-slide assembly for normal elevator speeds is optimal. The cavities preferably but not necessarily have a circular or polygonal perimeter and a circular or polygonal plan projection. A possible material for the guide is steel, and in particular, if the guide is made of sheet metal, steels of the types DX51D, S220GD, S250GD S280GD, S320GD or S350GD and their combinations. The invention also relates to an elevator comprising a car, its counterweight and at least two guides such as the one described.

### BRIEF DESCRIPTION OF THE FIGURES

In order to help a better understanding of the features of the invention and to complement this description, the following figures are attached as an integral part thereof, the character of which is illustrative and not limiting:

Figure 1 shows a guide according to the invention.
Figure 2 shows a detail of said guide and the parameters of interest.
Figures 3-7 are graphs of the Stribeck curve for cavities with different dimensions obtained at normal elevator operating speeds.

### DETAILED DESCRIPTION

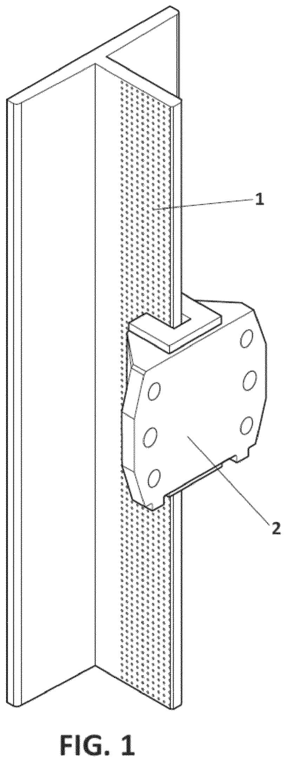

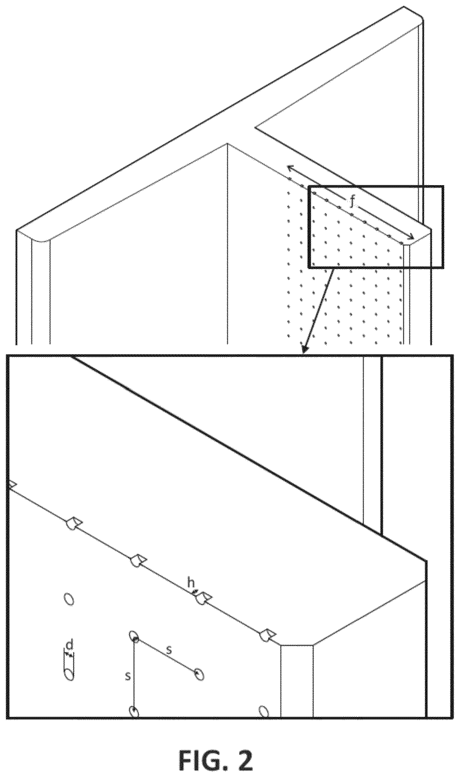

With reference to Figures 1 and 2, the guide of the invention comprises at least two flat surfaces on two faces of the guide (1) intended to cooperate with the slides (2). At least one of these faces is provided with homogeneously distributed cavities. The width of the cavities "d" is understood as the maximum dimension in any direction contained in a plane perpendicular to the thickness of the guide, or on the surface intended for the sliding of the guide. The depth "h" of the cavities is understood as the maximum dimension of the cavities in a direction perpendicular to the flat surface of the face of the guide, that is, perpendicular to the moving surface.

Between the cavities, the surface of the guide is completely flat, except for the tiny and irregular cavities that could be formed in the manufacturing process of the guides and that suppose a roughness of the surface that depends on the manufacturing process. In any case, said cavities are not present on the surface in a homogeneous way nor are they equal to each other.

The invention can be applied both to solid guides and to sheet steel. In particular, steels suitable for sheet metal guides are DX51D, S220GD, S250GD S280GD, S320GD and S350GD. For solid guides (extruded) any steel is suitable.

Various procedures can be used to manufacture the cavities on a conventional guide, such as laser ablation or stamping or by rolling.

By virtue of the cavities, which act as reservoirs for the lubricant, hydrodynamic lubrication improves and the coefficient of friction (COF) is reduced, in addition to increasing the residence time of the lubricant in the guide, preventing lubricant from falling into the pit. Thus, the guides do not have to be lubricated as often and therefore less oil is consumed in the life cycle of the elevator. In addition, by reducing the coefficient of friction, electricity consumption is also reduced, which improves the environmental footprint.

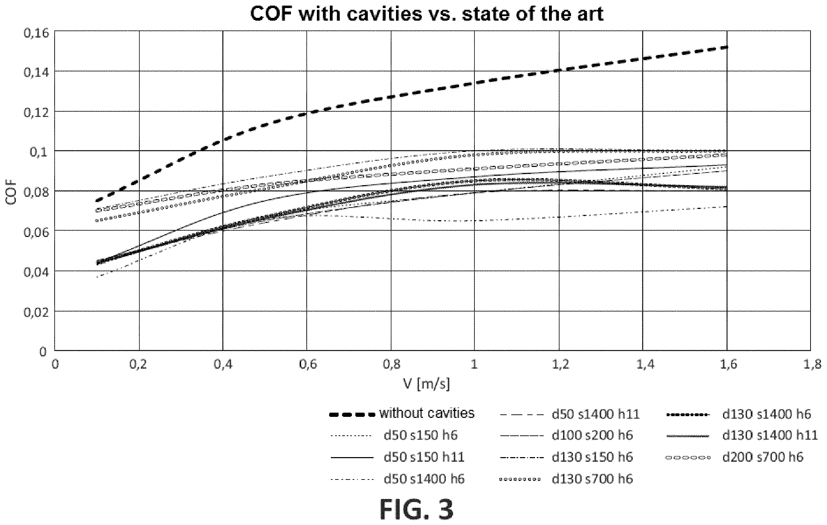

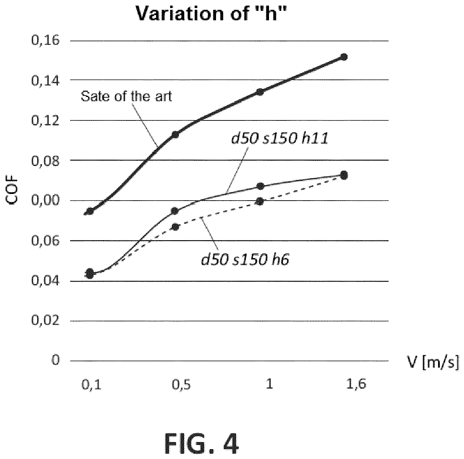

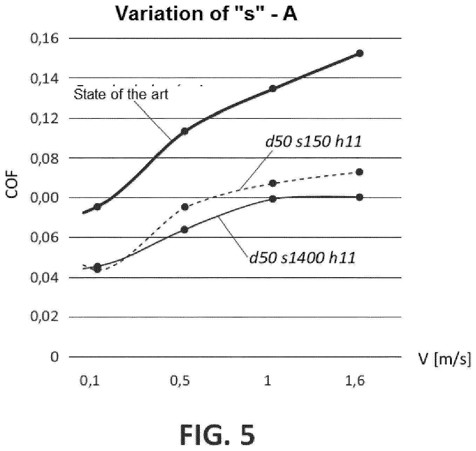

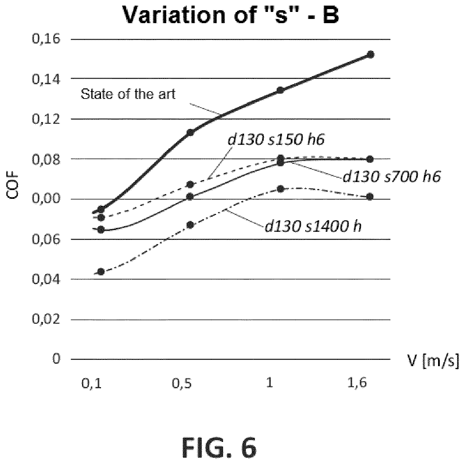

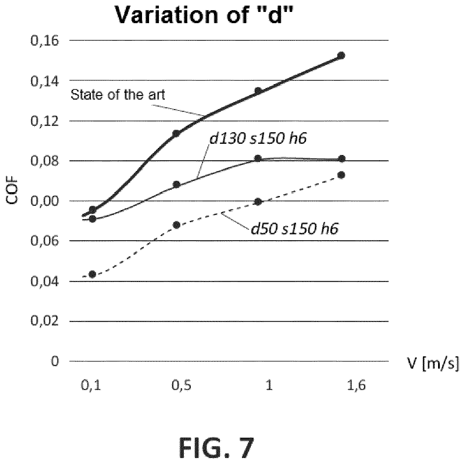

The Stribeck curve defines the coefficient of friction between two surfaces in the entire range of speeds that the elevator can be subjected to (outside this range it does not make sense to study the coefficient of friction). In Figures 3-7 the curve for a conventional guide (thicker curve) can be compared with curves corresponding to guides with different configurations of cavities according to the invention. The dimensions of the cavities and the distance between them have implications in the coefficient of friction and residence time of the oil.

After the experimental analyzes collected in the graphs (figs. 3-7), it has been concluded that the smaller the width "d", the smaller the depth "h" and the lower the density in the elevation of cavities, the COF is reduced. On the other hand, the oil residence time and consumption savings are optimal the larger "d" and "h" and the smaller "s". With the ranges "d" between 50 $\mu$m and 200 $\mu$m, "h" between 6 $\mu$m and 18 $\mu$m and s 150 $\mu$m and 1400 $\mu$m, an optimization is achieved in both effects.

In view of this description and figures, the person skilled in the art will be able to understand that the invention has been described according to some preferred embodiments thereof, but that multiple variations can be introduced in said preferred embodiments, without exceeding the subject matter of the invention as it has been claimed.

**Claims**

1. Guide for elevators comprising at least two faces adapted to cooperate with the slides of an elevator car and / or counterweight, **characterized in that** at least one of said faces is provided with a series of cavities arranged continuously and homogeneously along its surface in a width f between 5 and 40mm, wherein the cavities have a width d, a depth h and whose centers are separated by a distance s, the following conditions being fulfilled:

$$50 \text{ μm} =<d<= 200\text{μm,}$$

$$6 \text{ μm} =<h<=18\text{μm}$$

and

$$150 \text{ μm} =<s<= 1400 \text{ μm.}$$

2. Guide for elevators according to claim 1 **characterized in that** the cavities have a circular or polygonal perimeter and a plan projection that is also circular or polygonal.

3. Guide for elevators according to any of the preceding claims, **characterized in that** it is made of steel.

4. Guide for elevators according to claim 3 **characterized in that** it is solid.

5. Guide for elevators according to claim 3 **characterized in that** it is made of sheet metal and the steel is of the type DX51D, S220GD, S250GD S280GD, S320GD or S350GD, or combinations of the above.

6. Elevator comprising a car, a counterweight and at least two guides according to any of the preceding claims.

**Patentansprüche**

1. Führung für Aufzüge, die mindestens zwei Flächen aufweist, die dazu geeignet sind, mit den Gleitschienen einer Aufzugskabine und/oder Gegengewicht zusammenzuwirken, **dadurch gekennzeichnet, dass** mindestens eine der Fläche mit einer Reihe von Hohlräumen versehen ist, die kontinuierlich und homogen entlang ihrer Fläche in einer Breite f zwischen 5 und 40 mm angeordnet sind, wobei die Hohlräume eine Breite d und eine Tiefe h aufweisen und deren Zentren um einem Abstand s getrennt sind, wobei die folgenden Bedingungen erfüllt werden:

$$50 \text{ μm} = <d< = 200 \text{ μm}$$

$$6 \text{ μm} = <h< = 18 \text{ μm,}$$

und

$$150 \text{ μm} = <s< = 1400 \text{ μm.}$$

2. Führung für Aufzüge nach Anspruch 1, **dadurch gekennzeichnet, dass** die Hohlräume einen kreisförmigen oder polygonalen Umfang und eine Grundrissprojektion aufweisen, die ebenfalls kreisförmig oder polygonal ist.

3. Führung für Aufzüge nach einem der vorstehenden Ansprüche, **dadurch gekennzeichnet, dass** die Führung aus Stahl besteht.

4. Führung für Aufzüge nach Anspruch 3, **dadurch gekennzeichnet, dass** die Führung massiv ist.

5. Führung für Aufzüge nach Anspruch 3, **dadurch ge-**

**kennzeichnet, dass** die Führung aus Blech besteht und das Stahl vom Typ DX51D, S220GD, S250GD, S280GD, S320GD oder S350GD oder eine Kombinationen der oben genannten Typen ist.

6. Aufzug, der eine Kabine, ein Gegenwicht und mindestens zwei Führungen nach einem der vorstehenden Ansprüche aufweist.


**Revendications**

1. Guide pour ascenseurs comprenant au moins deux faces adaptées pour coopérer avec les coulisseaux d'une cabine et/ou d'un contrepoids d'ascenseur, **caractérisé en ce qu'**au moins une desdites faces est pourvue d'une série de cavités agencées de façon continue et homogène le long de sa surface dans une largeur f entre 5 et 40 mm, dans lequel les cavités présentent une largeur d, une profondeur h et dont les centres sont séparés par une distance s, les conditions suivantes étant remplies :

$$50 \ \mu m =< d <= 200 \ \mu m,$$

$$6 \ \mu m =< h <= 18 \ \mu m$$

et

$$150 \ \mu m =< s <= 1400 \ \mu m.$$

2. Guide pour ascenseurs selon la revendication 1 **caractérisé en ce que** les cavités présentent un périmètre circulaire ou polygonal et une projection de plan qui est également circulaire ou polygonale.

3. Guide pour ascenseurs selon l'une quelconque des revendications précédentes **caractérisé en ce qu'**il est composé d'acier.

4. Guide pour ascenseurs selon la revendication 3 **caractérisé en ce qu'**il est plein.

5. Guide pour ascenseurs selon la revendication 3 **caractérisé en ce qu'**il est composé de tôle et l'acier est du type DX51D, S220GD, S250GD, S280GD, S320GD ou S350GD, ou de combinaisons de ceux-ci.

6. Ascenseur comprenant une cabine, un contrepoids et au moins deux guides selon l'une quelconque des revendications précédentes.

**FIG. 1**

FIG. 2

COF with cavities vs. state of the art

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 209177798 U

- CN 101628678